# EUROPEAN PATENT APPLICATION

(11) **EP 4 745 202 A1**
(43) Date of publication of application: **20.05.2026**
(21) Application number: 24838817.5
(22) Date of filing: 10.07.2024
(51) Int. Cl.: C09D 1/00, C09D 7/61, C09D 7/63, C23C 22/44, C23C 22/05

(54) **ENVIRONMENTALLY-FRIENDLY WATER-BASED MODIFICATION TREATMENT AGENT CAPABLE OF IMPROVING SURFACE PROCESSING PERFORMANCE FOR GALVANIZED STEEL SHEET, AND USE**

(30) Priority: 10.07.2023 CN 202310835290
(71) Applicant: BAOSHAN IRON & STEEL CO., LTD., Shanghai 201900 (CN)
(72) Inventor: ZHAO, Yanliang, Shanghai 201900 (CN); ZHENG, Kailong, Shanghai 201900 (CN); SUN, Min, Shanghai 201900 (CN); DAI, Yigang, Shanghai 201900 (CN)
(74) Representative: Kuhnen & Wacker Patent- und Rechtsanwaltsbüro PartG mbB
(86) International application number: PCT/CN2024/104604
(87) International publication number: WO 2025/011565

(57) **Abstract**

Disclosed in the present invention are an environmentally-friendly water-based modification treatment agent capable of improving the surface processing performance for a galvanized steel sheet, and a use. The environmentally-friendly water-based modification treatment agent comprises the following components which are dissolved in water to form a solution: (A) a fluorine-containing compound, the content of which is 0.02-0.15 mol/L in terms of the molar concentration of fluorine ions; (B) a nonionic polyol surfactant, the content of which is 0.004-0.03 mol/L in terms of the molar concentration of hydroxyl; (C) an oxidizing agent, the content of which is 0.02-0.2 mol/L in terms of the molar concentration of the oxidizing agent; (D) a colloidal dispersion containing colloidal silica particles, the content of which is 0.008-0.06 mol/L in terms of the molar concentration of element Si; and (E) a compound containing a hydroxycarboxylic acid group, the content of which is 0.2-2 mol/L in terms of the molar concentration of carboxyl. The present invention can effectively improve the surface processing performance for a galvanized steel sheet.

## Description

### Technical Field

The present disclosure relates to the field of metal material surface treatment technology, specifically to an environmentally friendly water-based modification treatment agent that improves the surface processing performance of galvanized steel sheets and its use. It can be applied to the surface modification treatment of zinc-based coated steel sheets such as electro-galvanized, hot-dip galvanized, and hot-dip zinc-iron alloy coated steel sheets in the automotive and home appliance fields.

### Background Art

Galvanized steel sheets are widely used in various fields such as automobiles, home appliances, and construction due to their excellent sacrificial anti-corrosion properties. However, because the characteristics of the zinc layer differ from those of cold-rolled carbon steel, there are significant differences in surface processing performance. Therefore, galvanized sheets compensate for their shortcomings in high-performance processing through various functional surface coatings, leading to the market application of various galvanized surface functional coating products.

The automotive manufacturing process primarily includes four major stages: forming, bonding, coating, and final assembly. Among these, the forming, bonding, and coating stages all involve the functional requirements of body material surfaces. Since the late 20th century, galvanized steel sheets have gradually become mainstream materials for vehicle body components. The automotive industry has developed trends toward high-efficiency production, green manufacturing, and safety and reliability, which impose specific requirements on the surface processing performance of materials, mainly reflected in the following three aspects: (1) high-efficiency production introduces new demands for the surface lubrication of steel sheets; (2) the application of environmentally-friendly pre-treatment processes driven by green manufacturing requires the surface reactivity of materials to effectively meet the demands of pre-coating treatment processes; (3) safety and reliability impose higher requirements on the surface bonding performance of materials.

The surface processing performance improvement treatment agents for galvanized steel plates mainly focus on the lubrication performance of forming processing. The system mainly comprises inorganic chromates, phosphates, molybdates, silica sols and the like, organic silanes, acrylic resins, polyurethane resins, and the like, which improve the product performance by forming a micro- or sub-micron scale coating layer on the surface of the steel sheet. For example, Chinese patent publication No. CN 101608311A proposes a zinc plated self-lubricating metal material, whose self-lubricating functional treatment agent mainly comprises a trivalent chromium compound, a silica sol, and an organic carboxylic acid, mainly used to improve the lubrication and corrosion resistance of galvanized surfaces. The Chinese patent publication No. CN 104497827A proposes an aqueous chromium free lubricating agent for the surface of a galvanized steel sheet and its preparation method. The treatment agent comprises an aqueous polyisocyanate, an aqueous polyacrylate emulsion, a silica sol, a wax emulsion, a surfactant, a coupling agent, a molybdate and a film forming agent. The treatment agent improves the lubrication and corrosion resistance of a galvanized steel sheet after surface treatment. Chinese Patent Publication No. CN1934232A proposes a lubricating treatment agent for an aqueous polyurethane resin composition, which mainly comprises a special polyurethane resin, polyolefin resin fine particles, and colloidal silica. The surface of the galvanized steel sheet treated by the treatment agent has corrosion resistance, alkali resistance, coating adhesion, and lubrication performance.

Although the above-mentioned treatment agents can improve the surface lubrication performance of galvanized sheets, they cannot effectively balance the bonding and pre-coating treatment performance required for galvanized products, and therefore cannot be effectively applied to the automotive manufacturing industry with higher comprehensive performance requirements.

In view of the above situation, it is necessary to develop a surface modification treatment agent for adjusting the surface lubrication, bonding and pre-coating treatment (phosphating, zirconizing) performance of galvanized steel sheets, which can meet the technological trends of high-efficiency production, safety and reliability, and green manufacturing in the automotive manufacturing process.

### Summary

The purpose of the present disclosure is to provide an environmentally friendly water-based modification treatment agent for improving the surface processing performance of a galvanized steel sheet and its use, which can form a nanoscale surface modification layer with excellent forming, adhesive bonding, and coating phosphating/zirconizing characteristics on the surface of galvanized steel sheets. This can effectively improve the surface processing performance of galvanized steel sheets and meet the technological trend requirements of high-efficiency production, safety and reliability, and green manufacturing in the automotive manufacturing process.

In order to achieve the above purpose, the present disclosure adopts the following technical solution:
The first aspect of the present disclosure provides an environmentally friendly water-based modification treatment agent for improving the surface processing performance of a galvanized steel sheet, comprising the following components dissolved in water to form a solution:
(A) a fluorine-containing compound, with a content ranging from 0.02 to 0.15 mol/L calculated as the molar concentration of fluoride ions;
(B) a non-ionic polyol surfactant, with a content ranging from 0.004 to 0.03 mol/L calculated as the molar concentration of hydroxyl groups;
(C) an oxidant, with a content ranging from 0.02 to 0.2 mol/L calculated as the molar concentration of the oxidant;
(D) a colloidal dispersion comprising colloidal silica particles, with a content ranging from 0.008 to 0.06 mol/L calculated as the molar concentration of Si element; and
(E) a compound comprising a hydroxycarboxylic acid group, with a content ranging from 0.2 to 2 mol/L calculated as the molar concentration of carboxyl groups.

Preferably, a chemical compound containing six fluoride ions is used as the fluorine-containing compound; and/or, the non-ionic polyol surfactant is an organic solvent comprising a hydroxyl group; and/or, the oxidant is selected from an oxidant with a standard electrode potential of 0.95-1.7V; and/or, a silica sol with a particle size of 5-20nm is used as the colloidal dispersion comprising colloidal silica particles.

Preferably, the fluorine-containing compound is a fluorotitanate salt, a fluorosilicate salt, and/or a fluorozirconate salt. The salt is preferably an ammonium salt, a sodium salt, or a potassium salt. Preferably, the fluorine-containing compound is selected from one or two of ammonium hexafluorotitanate, sodium hexafluorosilicate, ammonium hexafluorozirconate, sodium hexafluorotitanate, sodium hexafluorozirconate, potassium hexafluorotitanate, and potassium hexafluorozirconate, and more preferably one or two of ammonium hexafluorotitanate, sodium hexafluorozirconate, potassium hexafluorotitanate, and potassium hexafluorozirconate; and/or, the non-ionic polyol surfactant is selected from one of dipropylene glycol methyl ether, ethylene glycol ethyl ether, ethylene glycol butyl ether, triethanolamine, and isopropanol, preferably selected from isopropanol, ethylene glycol ethyl ether, and triethanolamine; and/or, the oxidant is selected from one or two of sodium nitrate, copper nitrate, potassium nitrate, potassium permanganate, bromate (such as sodium bromate), hydrogen peroxide, and ammonium metavanadate, preferably selected from hydrogen peroxide, potassium permanganate, and ammonium metavanadate; and/or, the compound comprising a hydroxycarboxylic acid group is selected from one or two of 3,4,5-trihydroxybenzoic acid, ethylenediaminetetraacetic acid, citric acid, oxalic acid, salicylic acid, tartaric acid, and tannic acid, preferably selected from tannic acid, oxalic acid, and ethylenediaminetetraacetic acid.

Preferably, the content of the fluorine-containing compound is 0.04 to 0.1 mol/L calculated as the molar concentration of fluoride ions.

Preferably, the content of the nonionic polyol surfactant is 0.006-0.015 mol/L calculated as the molar concentration of hydroxyl groups.

Preferably, the content of the oxidant is 0.04 to 0.12 mol/L calculated as the molar concentration of the oxidant.

Preferably, the content of the colloidal dispersion comprising colloidal silica particles is 0.015-0.03 mol/L calculated as the molar concentration of Si element.

Preferably, the content of the compound comprising a hydroxycarboxylic acid group is 0.8-1.5 mol/L calculated as the molar concentration of carboxyl groups.

Preferably, the pH of the environmentally friendly water-based modification treatment agent is 2-5.

The second aspect of the present disclosure provides the use of an environmentally friendly water-based modification treatment agent for improving the surface processing performance of a galvanized steel sheet as described in the first aspect of the present disclosure, including the use in improving the friction performance, adhesive bonding performance, phosphating performance, and zirconizing performance of galvanized steel sheets.

The third aspect of the present disclosure provides a method for improving the friction performance, adhesive bonding performance, phosphating performance, and zirconizing performance of a galvanized steel sheet, which comprises a step of applying the environmentally friendly water-based modification treatment agent for improving the surface processing performance of a galvanized steel sheet as described in the present disclosure on the surface of the galvanized steel sheet. In some embodiments, the environmentally friendly water-based modification treatment agent can be applied to the surface of galvanized steel sheets through immersion coating, spraying, roller coating, etc., forming a wet film and then the wet film is dried. For example, the drying can be done by blowing or baking. The environmentally friendly water-based modification treatment agent in the present disclosure can be applied in an amount of 100-2000 mg/m². After drying, a nanoscale surface modification layer can be formed on the surface of galvanized steel sheet. Preferably, the thickness of the nanoscale surface modification layer is 20-80mg/m².

The fourth aspect of the present disclosure provides a galvanized steel sheet, which has a nanoscale surface modification layer on its surface. The modification layer is formed by drying the environmentally friendly water-based modification treatment agent according to the present disclosure applied to the surface of the galvanized steel sheet.

In comparison to the existing technology, the present disclosure has the following beneficial effects:
1. The environmentally friendly water-based modification treatment agent for improving the surface processing performance of galvanized steel sheets of the present disclosure and its use can effectively treat the surface of zinc-based coated steel sheets (hot-dip galvanized, electro-galvanized, hot-dip zinc-iron alloy coated) and achieve comprehensive optimization of forming, adhesive bonding, and pre-coating treatment (phosphating/zirconizing) performance, meeting the requirements of environmentally friendly and efficient processing technology;
2. The environmentally friendly water-based modification treatment agent of the present disclosure can form a wet film on the surface of galvanized steel sheets through immersion, spraying, roller coating, and the like. By blowing or baking, the treatment agent can quickly form a nanoscale surface modification layer on the surface of galvanized steel sheets, which can significantly improve the processing performance of the galvanized steel sheet surface.

### Embodiments

The present disclosure will be described in detail below in conjunction with specific examples. The following examples will help those skilled in the art to further understand the present disclosure, but in no way limit the present disclosure.

Through theoretical analysis, extensive laboratory scientific research, and practical verification, the present disclosure has ultimately determined a technical route for an environmentally friendly water-based treatment agent for zinc-based coated steel sheets that ensures good formability, good adhesive bonding, good phosphating, and good zirconizing surface nanomodification. By combining the typical surface structural characteristics of hot-dip galvanized/electro-galvanized/alloyed hot-dip galvanized steel and the basic principles of surface lubrication, adhesive bonding, phosphating, and zirconizing treatment processes, the mechanism for good surface strengthening of zinc-based coated steel sheets during processing was clarified, leading to the development of an environmentally friendly water-based modification treatment agent. This environmentally friendly water-based modification treatment agent can be applied to zinc-based coated steel sheet materials during high-speed continuous coil production and component processing. The specific treatment method includes forming a wet film on the surface of the steel sheet through immersion, spraying, roll coating and the like, and forming a surface modification layer rapidly on the surface of the steel sheet by blowing or baking. This surface modification layer can significantly improve the surface processing performance.

The present disclosure provides an environmentally friendly water-based modification treatment agent for improving the surface processing performance of a galvanized steel sheet, comprising the following components dissolved in water to form a solution:
(A) a fluorine-containing compound, with a content ranging from 0.02 to 0.15 mol/L calculated as the molar concentration of fluoride ions;
(B) a non-ionic polyol surfactant, with a content ranging from 0.004 to 0.03 mol/L calculated as the molar concentration of hydroxyl groups (OH);
(C) an oxidant, with a content ranging from 0.02 to 0.2 mol/L calculated as the molar concentration of the oxidant;
(D) a colloidal dispersion comprising colloidal silica particles, with a content ranging from 0.008 to 0.06 mol/L calculated as the molar concentration of Si element; and
(E) a compound comprising a hydroxycarboxylic acid group, with a content ranging from 0.2 to 2 mol/L calculated as the molar concentration of carboxyl groups (COOH).

The environmentally friendly water-based modification treatment agent of the present disclosure is prepared by mixing the above components in specific ratios to form an acidic solution with a pH of 2 to 5. It can be applied to the surfaces of metal materials such as hot-dip galvanized, electro-galvanized, and zinc-iron alloy coated steel sheets to achieve the effect of optimized processing performance.

The component ratios and design principles of the environmentally friendly water-based modification treatment agent of the present disclosure are as follows:
(A) with respect to the fluorine-containing compound, a chemical compound containing six fluoride ions, such as a fluorotitanate salt, a fluorosilicate salt, and/or a fluorozirconate salt, may be adopted. The salt is preferably an ammonium salt, a sodium salt, or a potassium salt. Preferably, the fluorine-containing compound is selected from one or two of ammonium hexafluorotitanate, sodium hexafluorosilicate, ammonium hexafluorozirconate, sodium hexafluorotitanate, sodium hexafluorozirconate, potassium hexafluorotitanate, and potassium hexafluorozirconate and the like. The content of the fluorine-containing compound in the environmentally friendly water-based modification treatment agent is 0.02-0.15 mol/L, preferably 0.03-0.1 mol/L or 0.04-0.1 mol/L, calculated as the molar concentration of fluoride ions (F⁻). The main role of the fluorine-containing compound is to utilize the high reactivity of F⁻ in acidic solutions to rapidly etch the oxide layer on the material surface, triggering a film-forming reaction, and to form a passivation layer with oxidation barrier function on the treated material surface, thereby preventing the formation of loose zinc-containing compounds that could affect surface adhesive bonding performance. When the content is below 0.02 mol/L, the oxidation barrier effect significantly decreases; when the content exceeds 0.15 mol/L, the stability of the treatment agent significantly decreases, resulting in a decreased surface lubrication optimization effect of the modification layer.
(B) with respect to the non-ionic polyol surfactant, it is specifically an organic solvent containing a hydroxyl group, which can be selected from one of dipropylene glycol methyl ether, ethylene glycol ethyl ether, ethylene glycol butyl ether, triethanolamine, isopropanol, and the like. The content of the non-ionic polyol surfactant in the environmentally friendly water-based modification treatment agent is 0.004-0.03 mol/L, preferably 0.006-0.015 mol/L or 0.008-0.025 mol/L, calculated as the molar concentration of hydroxyl groups (OH). The main function of the non-ionic polyol surfactant is to adjust the surface leveling performance; when its content is lower than 0.004 mol/L, the film formation optimization effect of the agent on the surface of zinc-based coated steel sheets decreases significantly, leading to uneven film formation that affects the optimization effect of processing performance; when its content exceeds 0.03 mol/L, excessive adsorption residue affects the adhesion of the surface modification layer, resulting in a reduction in the adhesive bonding performance and pre-coating treatment performance.
(C) with respect to the oxidant, it mainly involves an oxidant with a standard electrode potential Eθ in the range of 0.95-1.7 V. The oxidant is specifically selected from one or two of sodium nitrate, copper nitrate, potassium nitrate, potassium permanganate, bromate, hydrogen peroxide, and ammonium metavanadate. The content of the oxidant in the environmentally friendly water-based modification treatment agent is 0.02-0.2 mol/L, preferably 0.04-0.12 mol/L or 0.06-0.2 mol/L, calculated as the molar concentration of the oxidant. The main function of the oxidant is to use its oxidizing properties to facilitate the film-forming process of the treatment agent, achieving an effective film thickness in a short time, thereby optimizing surface lubrication performance. When its content is below 0.02 mol/L, the film-forming effect of the treatment agent and the lubrication function of the film are significantly affected; when its content exceeds 0.2 mol/L, it can compromise the stability of the solution system and hinder the film-forming reaction of other components.
(D) with respect to the colloidal dispersion comprising colloidal silica particles, it is specifically a silica sol with a particle size ranging from 5 to 20 nm; the content of the colloidal dispersion comprising colloidal silica particles in the environmentally friendly water-based modification treatment agent is 0.008-0.06 mol/L, calculated as the molar concentration of Si element, preferably 0.015-0.03 mol/L or 0.015-0.04 mol/L. The main function of the colloidal dispersion comprising colloidal silica particles is to improve the surface lubrication with uniformly distributed nanoscale fine particles while enhancing the filming and adhesion performance of the environmentally friendly water-based modification treatment agent. When the particle size is less than 5 nm, aggregation may occur, affecting the stability of the water-based modification treatment agent; when the particle size is greater than 20 nm, the lubrication effect after film formation decreases. In the environmentally friendly water-based modification treatment agent system, if the content of the colloidal dispersion comprising colloidal silica particles is below 0.008 mol/L, the filming and lubrication function of the treatment agent is significantly reduced; if the content exceeds 0.06 mol/L, the treatment agent bonds during film formation, having significant negative effects on the pre-coating treatment performance.
(E) with respect to the compound comprising a hydroxy carboxylic acid group, it is specifically selected from one or two of the following: 3,4,5-trihydroxybenzoic acid, ethylenediaminetetraacetic acid, citric acid, oxalic acid, salicylic acid, tartaric acid, tannic acid, and the like; the compound comprising a hydroxy carboxylic acid group is present in the environmentally friendly water-based modification treatment agent in an amount of 0.2-2 mol/L, preferably 0.8-1.5 mol/L or 0.7-1.2 mol/L, calculated as the molar concentration of carboxyl (COOH) groups. The main function of the compound comprising a hydroxy carboxylic acid group is to react with the Zn and Fe metal elements on the coating surface to form granular salts of organic acids, enhancing the surface lubrication. A large amount of salts of organic acids can further enrich the chemical active sites on the material surface, achieving an optimized pre-coating treatment effect. When the molar concentration of carboxyl groups in the treatment agent is below 0.2 mol/L, the amount of granular salts of organic acids formed during film formation is insufficient, failing to achieve the optimized lubrication effect; when the molar concentration of carboxyl groups exceeds 2 mol/L, the stability of the treatment agent is poor, and the particle size of the granular salts of organic acids is too large, and the self-cohesive bonding strength is insufficient, which negatively affects surface lubrication and coating adhesion.

In some embodiments, the environmentally friendly water-based modification treatment agent for improving the surface processing performance of galvanized steel sheets of the present disclosure comprises a fluorine-containing compound at an amount of 0.03 to 0.1 mol/L calculated as the molar concentration of fluoride ions, a nonionic polyol surfactant at an amount of 0.008 to 0.025 mol/L calculated as the molar concentration of hydroxyl groups (OH), an oxidant at an amount of 0.06 to 0.2 mol/L calculated as the molar concentration of the oxidant, a colloidal dispersion comprising colloidal silica particles at an amount of 0.015 to 0.04 mol/L calculated as the molar concentration of Si element, and a compound comprising a hydroxycarboxylic acid group at an amount of 0.7 to 1.2 mol/L calculated as the molar concentration of carboxyl groups (COOH). Preferably, in these embodiments, the fluorine-containing compound is selected from one or two of ammonium hexafluorotitanate, sodium hexafluorozirconate, potassium hexafluorotitanate, and potassium hexafluorozirconate; the nonionic polyol surfactant is selected from isopropanol, ethylene glycol ethyl ether, and triethanolamine; the oxidant is selected from hydrogen peroxide, potassium permanganate, and ammonium metavanadate; and the compound comprising a hydroxycarboxylic acid group is selected from tannic acid, oxalic acid, and ethylenediaminetetraacetic acid.

The present disclosure also provides use of the aforementioned environmentally friendly water-based modification treatment agent on galvanized steel sheets (hot-dip galvanized, electro-galvanized, hot-dip zinc-iron alloy coated). The environmentally friendly water-based modification treatment agent can be applied to the galvanized steel sheets by immersion, spraying, roller-coating, or other methods, and then a nano-scale surface modification layer with excellent forming, adhesive bonding, and coating phosphating/zirconizing characteristics is formed on the surface of the galvanized steel sheets through blowing or baking. The environmentally friendly water-based modification treatment agent enables the surface of galvanized steel sheets to possess excellent forming, adhesive bonding, and environmentally friendly coating process performance.

In the present disclosure, galvanized steel sheets, such as hot-dip galvanized, electro-galvanized, and hot-dip zinc-iron alloy coated steel sheets, may be of various models and specifications well known in the field, and they can be various galvanized steel sheets used in the automotive, home appliance, and construction industries. Exemplary galvanized steel sheets typically have a substrate containing C, Si, Mn, and Ti, unavoidable impurities such as P and S and the balance of Fe. In the substrate of an exemplary galvanized steel sheet, by mass percentage, the C content can be 0.01-0.15%, the Si content can be 0.1-0.5%, the Mn content can be 0.1-0.5%, the Ti content can be 0.1-0.4%, the P content is usually ≤0.08%, and the S content is usually ≤0.05%. The thickness of the zinc coating of an exemplary galvanized steel sheet is usually 10-100 g/m², such as 20-60 g/m².

The following provides a further introduction to an environmentally friendly water-based modification treatment agent for improving the surface processing performance of galvanized steel sheets and its use, in conjunction with specific examples.

### Examples

### 1) Test samples:

The materials used in the examples included hot-dip galvanized, hot-dip zinc-iron alloy coated, and electro-galvanized materials, all with a thickness of 0.7mm. The composition was shown in Table 1.

**Table 1: Galvanized steel sheets used in the examples**

| Material Type | Chemical composition of substrate% (by mass) | | | | | | Thickness of coating |
|---|---|---|---|---|---|---|---|
| | C | Si | Mn | P | S | Ti | |
| hot-dip galvanized | 0.08 | 0.2 | 0.2 | 0.06 | 0.03 | 0.2 | 45g/m² |
| hot-dip zinc-iron alloy coated | 0.06 | 0.3 | 0.2 | 0.05 | 0.03 | 0.25 | 45g/m² |
| electro-galvanized | 0.08 | 0.2 | 0.2 | 0.04 | 0.035 | 0.2 | 40g/m² |

### 2) Sample Processing and Cleaning Method:

The above materials were processed by cutting into the following sample sizes: 150mm × 70mm samples for evaluating the coating phosphating and zirconizing performance; 25.4mm × 100mm samples for evaluating the adhesive bonding performance; 25mm × 400mm samples for evaluating the friction performance.

The samples were cleaned by spraying with an alkaline degreasing agent (pH = 11-12) to remove surface contaminants and oils, followed by rinsing with pure water to remove residual alkaline components from the surface, and then air-dried with cold air for later use.

### 3) Coating

The environmentally friendly water-based modification treatment agent was applied onto the surface of the galvanized steel sheet. The substrate types, component ratios of the environmentally friendly water-based modification treatment agent, and coating methods used in the various examples and comparative examples were shown in Table 2. After coating, drying was carried out by blowing or baking. The amount of water-based modification treatment agent applied in the examples and comparative examples resulted in a nanoscale surface modification layer with a thickness in the range of 20-85 mg/m² after drying, as shown in Table 2.

**Table 2: Environmentally friendly water-based modification treatment agents used in the examples and comparative examples**

| | Substrate type | (A) molar concentration of F element (mol/L) | | (B) molar concentration of hydroxyl groups (mol/L) | | (C) molar concentration (mol/L) | | (D) molar concentration of Si element (mol/L) | | | (E) molar concentration of carboxyl groups (mol/L) | | Coating method | Thickness of the nano-scale surface modification layer |
|---|---|---|---|---|---|---|---|---|---|---|---|---|---|---|
| | | type | Content | type | content | type | content | type | particle size | content | type | content | method | film weight (mg/M²) |
| Example 1 | hot-dip galvanized | Ammonium hexafluorozirconate | 0.15 | ethylene glycol butyl ether | 0.004 | sodium nitrate | 0.08 | Si element | 5nm | 0.008 | citric acid | 0.2 | immersion | 25 |
| Example 2 | hot-dip zinc-iron alloy coated | ammonium hexafluorotitanate, potassium hexafluorozirconate | 0.12 | dipropylene glycol methyl ether | 0.012 | copper nitrate | 0.02 | Si element | 20nm | 0.06 | oxalic acid, ethylenediaminetetraacetic acid | 2 | spaying | 20 |
| Example 3 | hot-dip galvanized | sodium hexafluorosilicate | 0.02 | triethanolamine | 0.03 | Sodium bromate | 0.11 | Si element | 10nm | 0.03 | 3,4,5-trihydroxybenzoic acid | 0.5 | Immersion | 35 |
| Example 4 | electro-gal vanized | ammonium hexafluorotitanate, sodium hexafluorozirco- | 0.08 | isopropanol | 0.018 | hydrogen peroxide | 0.06 | Si element | 5nm | 0.015 | tannic acid | 1.2 | spaying | 50 |
| | | nate | | | | | | | | | | | | |
| Example 5 | hot-dip zinc-iron alloy coated | potassium hexafluorotitanate | 0.03 | ethylene glycol ethyl ether | 0.008 | Potassi um permanganate | 0.2 | Si element | 15nm | 0.04 | oxalic acid | 0.9 | roller coating | 65 |
| Example 6 | electro-gal vanized | potassium hexafluorozirconate | 0.1 | triethanolamine | 0.025 | ammonium metavanadate | 0.15 | Si element | 8nm | 0.025 | ethylenediaminetetraacetic acid | 0.7 | immersion | 80 |
| Comparative Example 1 | hot-dip galvanized | ammonium hexafluorotitanate, potassium hexafluorozirconate | 0.16 | isopropanol | 0.04 | ammonium metavanadate | 0.21 | Si element | 3nm | 0.07 | citric acid | 2.1 | spaying | 15 |
| Comparative Example 2 | hot-dip zinc-iron alloy coated | sodium hexafluorosilicate | 0.06 | ethylene glycol butyl ether | 0.045 | hydrogen peroxide | 0.22 | Si element | 10nm | 0.07 | oxalic acid, ethylenediaminetetraacetic acid | 0.8 | immersion | 30 |
| Comparative Example 3 | hot-dip galvanized | ammonium hexafluorotitanate, sodium hexafluorozirconate | 0.01 | dipropylene glycol methyl ether | 0.003 | potassium permanganate | 0.01 | Si element | 25nm | 0.007 | 3,4,5-trihydroxybenzoic acid | 0.1 | spaying | 60 |
| Comparative Example 4 | electro-gal vanized | potassium hexafluorotitanate | 0.01 | ethylene glycol ethyl ether | 0.015 | potassium perman ganate | 0.01 | Si element | 15nm | 0.04 | tannic acid | 0.1 | spaying | 85 |

| | | | | | | | | | | | | | | |
|---|---|---|---|---|---|---|---|---|---|---|---|---|---|---|
| Note: the silica sol colloidal dispersion of D is a commercially available product from SNOWTEX, a Japanese chemical company. | | | | | | | | | | | | | | |

### 4) Performance evaluation method

The surface treated samples obtained in the above examples and comparative examples were coated with 500mg/m² of an anti-rust oil and left for 24 hours for performance evaluation.

### (a) Friction coefficient test

According to ASTM D1894, the surface dynamic friction coefficient of galvanized steel sheets with composite nanostructures was measured using stainless steel ball point pressure.

The evaluation criteria for surface friction performance were as follows:
⊚: The friction coefficient decreased by ≥ 30% compared to an untreated substrate;
∘: The friction coefficient decreased by 10% to 30% compared to an untreated substrate;
Δ: The friction coefficient decreased by 0% to 10% compared to an untreated substrate;
×: The friction coefficient remained unchanged or increased compared to an untreated substrate.

### (b) Adhesive bonding performance testing

According to the standard SAE J1523, a typical structural adhesive was selected for adhesive bonding: TEROSON EP 5089. The bonding area of the adhesive bonded sample was 3.2cm², the bonding thickness was 0.2mm, and the adhesive was cured at a curing temperature of 160 °C for a time period of 15min. After curing and bonding for 24 hours, the sample was immersed in deionized water at a temperature of 55 °C for 7 days, and then was taken out for tensile peeling test. The tensile test was conducted according to ASTM D 1002, with a tensile speed of 13mm/min. The adhesive bonding effect was evaluated through peeling method.

The two samples after the completion of the tensile peeling process was analyzed in terms of peeling methods (peeling methods were divided into two types: cohesive peeling, which meant internal fracture of the adhesive; interfacial peeling, which meant detachment of the adhesive from the metal surface), and the adhesive bonding performance was evaluated based on the percentage of cohesive peeling area. The evaluation criteria were as follows:
⊚: a cohesive peeling area=100%;
∘: 85% ≤ a cohesive peeling area < 100%;
Δ: 65% ≤ a cohesive peeling area < 85%;
×: a cohesive peeling area of less than 65%.

### (c) Phosphating performance test

The pre-coating treatment phosphating performance was evaluated. The laboratory simulation based on the pre-coating treatment phosphating process in automobile factories mainly included degreasing, surface conditioning, and phosphating processes. The relevant treatment agents were selected from commercial products from Parkerizing, and the specific process parameters were shown in Table 3.

**Table 3: parameters of the phosphating treatment process**

| Process | degreasing | water washing | surface conditioning | phosphating | water washing | pure water washing | drying |
|---|---|---|---|---|---|---|---|
| Processing method | soaking | spraying | soaking | soaking | spraying | spraying | baking |
| Processing temperature | 40°C | room temperature | room temperature | 35°C | room temperature | room temperature | 90°C |
| Processing time | 90s | 20s | 30s | 120s | 20s | 20s | -- |

After the sample was processed in the above way, the coverage rate and size of phosphating crystals were observed microscopically using a scanning electron microscope, and the phosphating film was retested by a chemical dissolution method. The specific method was as follows:
Evaluation of Phosphating Crystal Coverage

The phosphated surface of the sample was observed using a scanning electron microscope (equipment: Zeiss scanning electron microscope SIGMA 500) at a magnification of 1000 times, and was evaluated based on the coverage area ratio of the phosphating film. The evaluation criteria were as follows:
⊚: a phosphated film coverage rate=100%;
∘: 80% ≤ a phosphated film coverage rate < 100%;
Δ: 60% ≤ a phosphated film coverage rate < 80%;
×: a phosphated film coverage rate < 60%.

### (d) Zirconizing performance test

The pre-coating treatment zirconizing performance was evaluated. The laboratory simulation based on the pre-coating treatment zirconizing process in automobile factories mainly included degreasing, water washing, and zirconizing processes. The relevant treatment agents were selected from commercial products from Parkerizing, and the specific process parameters were shown in Table 4.

**Table 4: process parameters of the zirconizing performance test**

| Process | degreasing | water washing | zirconizing | water washing | pure water washing | drying |
|---|---|---|---|---|---|---|
| Processing method | soaking | spraying | soaking | spraying | spraying | baking |
| Processing temperature | 40°C | room temperature | 35°C | room temperature | room temperature | 90°C |
| Processing time | 90s | 20s | 90s | 20s | 20s | -- |

The film thickness of the zirconized surface of the sample was evaluated using X-ray fluorescence spectroscopy and the evaluation criteria were as follows:
⊚: zirconized film thickness increased by ≥ 100% compared to an untreated substrate;
∘: zirconized film thickness increased by 30% to 100% compared to an untreated substrate;
Δ: zirconized film thickness increased by -30% to 30% compared to an untreated substrate;
×: zirconized film thickness increased by ≤ 30% compared to an untreated substrate.

**Table 5: Performance of Samples from Examples and Comparative Examples**

| No. | Friction performance (grading) | Adhesive bonding performance (grading) | Phosphating performance (grading) | Zirconizing performance (grading) |
|---|---|---|---|---|
| Example 1 | ○ | ⊚ | ⊚ | ⊚ |
| Example 2 | ⊚ | ⊚ | ⊚ | ○ |
| Example 3 | ⊚ | ○ | ⊚ | ⊚ |
| Example 4 | ⊚ | ⊚ | ⊚ | ⊚ |
| Example 5 | ⊚ | ⊚ | ⊚ | ⊚ |
| Example 6 | ⊚ | ⊚ | ⊚ | ⊚ |
| Comparative Example 1 | × | × | × | × |
| Comparative Example 2 | ⊚ | × | ○ | × |
| Comparative Example 3 | Δ | Δ | Δ | Δ |
| Comparative Example 4 | × | Δ | Δ | Δ |

From Table 5, it can be seen that Examples 1-6 show good performance in all evaluation items, especially Examples 4, 5, and 6 have excellent comprehensive performance. From the comparison between Examples and Comparative Example 1, it can be seen that when the content of the treatment agent component is too high, there is a significant deterioration in the friction performance, adhesive bonding performance, phosphating performance, and zirconizing performance of the treated surface. From the comparison between Examples and Comparative Example 2, it can be seen that the surface friction performance is excellent when the content of the surfactant in the treatment agent component is high and the content of silica sol is high. However, there is a significant deterioration in the adhesive bonding performance and zirconizing performance. From the comparison between Examples and Comparative Example 3, it can be seen that when the content of the treatment agent component is too low, the surface friction performance, adhesive bonding performance, phosphating performance, and zirconizing performance are comparable to the substrate level, and no significant optimization effect is observed. From the comparison between Examples and Comparative Example 4, it can be seen that when the content of the oxidant and the content of the compound comprising a hydroxycarboxylic acid group in the treatment agent is too low, there is a significant deterioration in the friction performance of the treated surface. It can be seen from Examples 3, 4, and 5 that the treatment agent can be applied by typical coating methods such as spraying, immersion, and roll coating, and has a wider range of process adaptability.

In summary, the above examples are only used to illustrate the technical solution of the present disclosure but not to limit it. Although the present disclosure has been described in detail with reference to the preferred examples, those skilled in the art should understand that the technical solution of the present disclosure can be modified or equivalently replaced without departing from the purpose and scope of the technical solution of the present disclosure, which should be included in the scope of the claims of the present disclosure.

## Claims

1. An environmentally friendly water-based modification treatment agent for improving the surface processing performance of a galvanized steel sheet, comprising the following components dissolved in water to form a solution:
(A) a fluorine-containing compound, with a content ranging from 0.02 to 0.15 mol/L calculated as the molar concentration of fluoride ions;
(B) a non-ionic polyol surfactant, with a content ranging from 0.004 to 0.03 mol/L calculated as the molar concentration of hydroxyl groups;
(C) an oxidant, with a content ranging from 0.02 to 0.2 mol/L calculated as the molar concentration of the oxidant;
(D) a colloidal dispersion comprising colloidal silica particles, with a content ranging from 0.008 to 0.06 mol/L calculated as the molar concentration of Si element; and
(E) a compound comprising a hydroxycarboxylic acid group, with a content ranging from 0.2 to 2 mol/L calculated as the molar concentration of carboxyl groups.

2. The environmentally friendly water-based modification treatment agent for improving the surface processing performance of a galvanized steel sheet of claim 1, wherein the fluorine-containing compound adopts a chemical compound containing six fluoride ions, preferably a fluorotitanate salt, a fluorosilicate salt, and/or a fluorozirconate salt, wherein the salt is preferably an ammonium salt, a sodium salt, or a potassium salt; and/or
the non-ionic polyol surfactant is an organic solvent comprising a hydroxyl group; and/or
the oxidant is selected from an oxidant with a standard electrode potential of 0.95-1.7V; and/or
the colloidal dispersion comprising colloidal silica particles adopts a silica sol with a particle size of 5-20nm.

3. The environmentally friendly water-based modification treatment agent for improving the surface processing performance of a galvanized steel sheet of claim 1, wherein:
the fluorine-containing compound is selected from one or two of ammonium hexafluorotitanate, sodium hexafluorosilicate, ammonium hexafluorozirconate, sodium hexafluorotitanate, sodium hexafluorozirconate, potassium hexafluorotitanate, and potassium hexafluorozirconate; and/or
the non-ionic polyol surfactant is selected from one of dipropylene glycol methyl ether, ethylene glycol ethyl ether, ethylene glycol butyl ether, triethanolamine and isopropanol; and/or
the oxidant is selected from one or two of sodium nitrate, copper nitrate, potassium nitrate,
potassium permanganate, bromate, hydrogen peroxide, and ammonium metavanadate; and/or
the compound comprising a hydroxycarboxylic acid group is selected from one or two of 3,4,5-trihydroxybenzoic acid, ethylenediaminetetraacetic acid, citric acid, oxalic acid, salicylic acid, tartaric acid, and tannic acid.

4. The environmentally friendly water-based modification treatment agent for improving the surface processing performance of a galvanized steel sheet of claim 1, wherein the content of the fluorine-containing compound is 0.04 to 0.1 mol/L calculated as the molar concentration of fluoride ions.

5. The environmentally friendly water-based modification treatment agent for improving the surface processing performance of a galvanized steel sheet of claim 1, wherein the content of the nonionic polyol surfactant is 0.006-0.015 mol/L calculated as the molar concentration of hydroxyl groups.

6. The environmentally friendly water-based modification treatment agent for improving the surface processing performance of a galvanized steel sheet of claim 1, wherein the content of the oxidant is 0.04 to 0.12 mol/L calculated as the molar concentration of the oxidant.

7. The environmentally friendly water-based modification treatment agent for improving the surface processing performance of a galvanized steel sheet of claim 1, wherein the content of the colloidal dispersion comprising colloidal silica particles is 0.015-0.03 mol/L calculated as the molar concentration of Si element.

8. The environmentally friendly water-based modification treatment agent for improving the surface processing performance of a galvanized steel sheet of claim 1, wherein the content of the compound comprising a hydroxycarboxylic acid group is 0.8-1.5 mol/L calculated as the molar concentration of carboxyl groups.

9. The environmentally friendly water-based modification treatment agent for improving the surface processing performance of a galvanized steel sheet of claim 1, wherein the pH of the environmentally friendly water-based modification treatment agent is 2-5.

10. The environmentally friendly water-based modification treatment agent for improving the surface processing performance of a galvanized steel sheet of claim 1, wherein:
the content of the fluorine-containing compound is 0.03 to 0.1 mol/L calculated as the molar concentration of fluoride ions;
the content of the nonionic polyol surfactant is 0.008-0.025 mol/L calculated as the molar concentration of hydroxyl groups (OH);
the content of the oxidant is 0.06 to 0.2 mol/L calculated as the molar concentration of the oxidant;
the content of the colloidal dispersion comprising colloidal silica particles is 0.015-0.04 mol/L calculated as the molar concentration of Si element; and
the content of the compound comprising a hydroxycarboxylic acid group is 0.7-1.2 mol/L calculated as the molar concentration of carboxyl groups (COOH).

11. A method for improving the friction performance, adhesive bonding performance, phosphating performance, and zirconizing performance of a galvanized steel sheet, comprising the step of applying the environmentally friendly water-based modification treatment agent for improving the surface processing performance of a galvanized steel sheet of any one of claims 1-10 on the surface of the galvanized steel sheet.

12. The method of claim 11, wherein the method further comprises the step of applying the environmentally friendly water-based modification treatment agent to the surface of the galvanized steel sheet through immersion, spraying or roller coating to form a wet film and then drying it to form a nanoscale surface modification layer on the surface of the galvanized steel sheet.

13. A galvanized steel sheet having a nanoscale surface modification layer on its surface, wherein the modification layer is formed by drying the environmentally friendly water-based modification treatment agent according to any one of claims 1-10 applied to the surface of the galvanized steel sheet, preferably, the thickness of the modification layer is 20-80mg/m².

14. The galvanized steel sheet of claim 13, wherein the galvanized steel sheet is a galvanized steel sheet used in automobile field, home appliance filed, and construction field, including a hot-dip galvanized steel sheet, an electro-galvanized steel sheet, and a hot-dip zinc-iron alloy coated steel sheet.

15. Use of the environmentally friendly water-based modification treatment agent for improving the surface processing performance of a galvanized steel sheet according to any one of claims 1-10 in a galvanized steel sheet, or in improving the friction performance, adhesive bonding performance, phosphating performance, and zirconizing performance of a galvanized steel sheet.
